# FASCICULE DE BREVET EUROPEEN

(11) **EP 3 186 489 B1**
(45) Date de publication et mention de la délivrance du brevet: **30.10.2019**
(21) Numéro de dépôt: 15759914.3
(22) Date de dépôt: 21.08.2015
(51) Int. Cl.: F01D 19/00, F02C 7/26, F02C 7/275, F02C 9/26, F02C 9/28

(54) **DISPOSITIF ET PROCÉDÉ DE DÉMARRAGE D'UNE TURBINE À GAZ, PROCÉDÉ DE RÉGULATION DE LA VITESSE DE ROTATION D'UNE TURBINE À GAZ, ET TURBINE À GAZ ET TURBOMOTEUR ASSOCIÉS**
VORRICHTUNG UND VERFAHREN ZUM STARTEN EINER GASTURBINE, VERFAHREN ZUR REGELUNG DER DREHZAHL EINER GASTURBINE UND ZUGEHÖRIGE GASTURBINE UND TURBINENMOTOR
DEVICE AND METHOD FOR STARTING A GAS TURBINE, METHOD FOR REGULATING THE ROTATIONAL SPEED OF A GAS TURBINE, AND ASSOCIATED GAS TURBINE AND TURBINE ENGINE

(30) Priorité: 29.08.2014 FR 1458114
(43) Date de publication de la demande: 05.07.2017
(73) Titulaire: Safran Power Units, 31200 Toulouse (FR); Safran Electrical & Power, 31700 Blagnac (FR)
(72) Inventeur: CHEVALIER, Stéphane, 77550 Moissy-Cramayel (FR); SILET, Fabien, 31140 Pechbonnieu (FR); RENOTTE, Alexis, 31500 Toulouse (FR)
(74) Mandataire: Gevers & Orès
(86) Numéro de dépôt international: PCT/FR2015/052247
(87) Numéro de publication internationale: WO 2016/030616

(56) Documents cités:
- WO-A1-2014/037649
- US-A1- 2007 132 245
- US-A1- 2013 174 570
- US-A1- 2013 204 506
- US-B1- 6 836 086

## Description

### 1. Domaine technique de l'invention

L'invention concerne un dispositif de démarrage d'une turbine à gaz, un procédé de démarrage d'une turbine à gaz et un procédé de régulation de la vitesse de rotation d'une turbine à gaz. En particulier, l'invention concerne un dispositif de démarrage, un procédé de démarrage et un procédé de régulation de la vitesse de rotation d'une turbine à gaz d'un turbomoteur d'un aéronef.

### 2. Arrière-plan technologique

Sur les aéronefs, la puissance nécessaire au démarrage d'une turbine à gaz (TAG) est fournie soit par des batteries, soit par un groupe auxiliaire externe (chariot au sol ou réseau de fourniture d'un aéroport), soit par la génération électrique d'une autre turbine à gaz de l'aéronef (typiquement un groupe auxiliaire de puissance).

En phase de démarrage, l'accélération de la turbine à gaz dépend à la fois du couple appliqué par le dispositif de démarrage de la turbine à gaz et des couples résistants, engendrés par exemple par la boite accessoire, les rotors, les équipements entrainés via la boite accessoire ou des reprises de puissance mécanique sur le ou les rotors.

Ces couples résistants fluctuent de façon importante en fonction de l'environnement dans lequel se trouve la turbine à gaz, en particulier la température et l'altitude de l'aéronef. L'obtention d'un profil de démarrage reproductible et fiable dans ces conditions est complexe car l'information de couple résistant présenté par la turbine à gaz n'est généralement pas disponible.

De plus, le couple appliqué par le dispositif de démarrage est parfois difficile à mesurer, soit du fait de la conception du dispositif ou de la turbine, soit parce que la mesure de ce couple engendrerait des perturbations de la rotation de la turbine, entrainant des pertes de fiabilité. Une telle mesure de couple nécessite par ailleurs des moyens de mesure présentant généralement un encombrement et une masse supplémentaire dans la turbine à gaz.

Le document US 2013/204506 A1 décrit un système moteur de démarrage d'une turbine à gaz.

### 3. Objectifs de l'invention

L'invention vise à pallier au moins certains des inconvénients des dispositifs et procédés de démarrage de turbine à gaz connus.

En particulier, l'invention vise à fournir, dans au moins un mode de réalisation de l'invention, un dispositif et un procédé de démarrage qui permet de maîtriser le démarrage d'une turbine à gaz sans nécessiter une mesure directe du couple de la turbine.

L'invention vise aussi à fournir, dans au moins un mode de réalisation, un dispositif de démarrage qui assure un démarrage robuste de la turbine à gaz.

L'invention vise aussi à fournir, dans au moins un mode de réalisation, un dispositif de démarrage qui permet d'appliquer à la turbine un profil de démarrage en plusieurs phases.

L'invention vise aussi à fournir, dans au moins un mode de réalisation, un dispositif de démarrage qui permet une bonne gestion des phases transitoires de démarrage.

L'invention vise aussi à fournir, dans au moins un mode de réalisation, un dispositif de démarrage permettant un gain en performance.

L'invention vise aussi à fournir, dans au moins un mode de réalisation, un dispositif de démarrage permettant une réduction de la durée de démarrage.

L'invention vise aussi à fournir, dans au moins un mode de réalisation, un procédé de régulation de la vitesse de rotation d'une turbine à gaz.

### 4. Exposé de l'invention

Pour ce faire, l'invention concerne un dispositif de démarrage d'une turbine à gaz, comprenant un système de lancement apte à entrainer sur commande ladite turbine à gaz en rotation, comprenant :
- des moyens de réception d'une information représentative de la vitesse de rotation de la turbine à gaz,
- des moyens de calcul d'une consigne de couple en fonction de ladite information représentative de la vitesse de rotation de la turbine à gaz,

- des moyens de transmission de ladite consigne de couple au système de lancement,
les moyens de calcul de la consigne de couple étant adaptés pour effectuer une comparaison de l'information représentative de la vitesse de rotation de la turbine à gaz avec un profil de vitesse prédéterminé et calculer la consigne de couple à partir de ladite comparaison,
- un dispositif de dosage carburant adapté pour injecter du carburant dans une chambre de combustion de ladite turbine à gaz,
- des moyens de calcul d'une consigne de dosage carburant en fonction de ladite information représentative de la vitesse, et
- des moyens de transmission de la consigne de dosage carburant audit dispositif de dosage carburant,
et caractérisé en ce que les moyens de calcul de la consigne de dosage carburant sont adaptés pour effectuer une comparaison de l'information représentative de la vitesse de rotation de la turbine à gaz avec un profil de vitesse prédéterminé et calculer la consigne de dosage carburant à partir de ladite comparaison.

Un dispositif de démarrage selon l'invention permet donc un démarrage de la turbine en fonction d'une information représentative de la vitesse de la turbine à gaz en appliquant une consigne de couple de démarrage par l'intermédiaire du système de lancement. Contrairement au couple de la turbine, et notamment aux couples résistants de la turbine, la vitesse de rotation de la turbine à gaz est mesurable, par exemple par un capteur de vitesse qui transmet une information représentative de la vitesse de rotation aux moyens de réception de cette information, par exemple sous la forme d'une donnée numérique portée par un signal électrique. La consigne de couple permet de réguler très précisément la rotation de la turbine selon un profil de vitesse prédéterminé de rotation de la turbine à gaz lors d'un démarrage et pendant toute la durée de ce démarrage, et permet donc un démarrage plus robuste.

La comparaison effectuée par les moyens de calcul de la consigne de couple est une détermination de la différence entre l'information représentative de la vitesse de rotation de la turbine (dite vitesse réelle) avec une vitesse souhaitée, définie par le profil de vitesse prédéterminé.

Le dispositif permet de gérer l'injection du carburant dans la chambre de combustion de la turbine à gaz lors du démarrage de la turbine à gaz pour fournir un couple supplémentaire à la turbine qui s'ajoute au couple apporté par le système de lancement. Ainsi, le dispositif gère, en fonction de l'information représentative de la vitesse, la mise en rotation de la turbine à gaz par le système de lancement et le dispositif de dosage carburant afin de mieux contrôler différentes phases de démarrage. Notamment, les transitions entre des phases où la mise en rotation est due soit uniquement au système de lancement, soit uniquement à l'injection de carburant ou soit à une combinaison des deux, sont plus robustes.

La comparaison effectuée par les moyens de calcul de la consigne de dosage carburant est une détermination de la différence entre l'information représentative de la vitesse de rotation de la turbine (dite vitesse réelle) avec une vitesse souhaitée, définie par le profil de vitesse prédéterminé.

Avantageusement et selon l'invention, les moyens de réception d'une information représentative de la vitesse de rotation de la turbine à gaz, les moyens de calcul de la consigne de couple, les moyens de calcul de la consigne de dosage carburant, les moyens de transmission de la consigne de couple et les moyens de transmission de la consigne de dosage carburant sont embarqués dans une unité de commande pilotant ladite turbine à gaz.

L'unité de commande utilisée est par exemple une unité de contrôle moteur (ou ECU pour *Engine Control Unit* en anglais) permettant le contrôle d'une multitude d'éléments de la turbine par le biais d'une multitude d'actionneurs, ou un FADEC (pour *Full Authority Digital Engine Control* en anglais).

Selon cet aspect de l'invention, l'unité de commande permet de mutualiser les moyens de calcul et de transmission de la consigne de couple et de la consigne de dosage carburant dans un seul équipement. L'unité de commande peut aussi commander d'autres fonctionnalités de la turbine à gaz.

Avantageusement et selon l'invention, le système de lancement est apte à entrainer en rotation la turbine à gaz par le biais d'une boîte relais.

Selon cet aspect de l'invention, la boite relais permet la transmission du couple du système de lancement à la turbine à gaz, éventuellement modulé par un coefficient de réduction.

Avantageusement et selon l'invention, le système de lancement comprend une machine électrique apte à entraîner en rotation ladite turbine à gaz, et un système de pilotage de la machine électrique configuré pour recevoir ladite consigne de couple et pour commander l'alimentation de ladite machine électrique selon la consigne de couple.

Selon cet aspect de l'invention, le système de pilotage de la machine électrique réceptionne la consigne de couple par exemple grâce à son électronique de contrôle, et la traduit en commande sur la machine électrique, qui applique le couple à la turbine à gaz.

L'invention concerne également un procédé de régulation de la vitesse de rotation d'une turbine à gaz configurée pour être entrainée par un système de lancement, comprenant :
- une étape de réception d'une information représentative de la vitesse de rotation de la turbine à gaz,
- une étape de comparaison de l'information représentative de la vitesse de rotation de la turbine à gaz avec un profil de vitesse prédéterminé,
- une étape de calcul d'une consigne de couple à partir d'un résultat de ladite comparaison,
- une étape de transmission de ladite consigne de couple au système de lancement,
et caractérisé en ce qu'il comprend :
- une étape de calcul d'une consigne de dosage carburant à partir du résultat de ladite comparaison,
- une étape de transmission de la consigne de dosage carburant à un dispositif de dosage carburant adapté pour injecter du carburant dans une chambre de combustion de la turbine à gaz en fonction de ladite consigne de dosage carburant.

Un procédé de régulation selon l'invention permet donc de créer une boucle de régulation de la vitesse de rotation de la turbine afin de permettre un contrôle efficace de ladite vitesse de façon à suivre un profil de vitesse prédéterminé.

La comparaison effectuée pendant l'étape de comparaison est une détermination de la différence entre l'information représentative de la vitesse de rotation de la turbine (dite vitesse réelle) avec une vitesse souhaitée, définie par le profil de vitesse prédéterminé. Le résultat de la comparaison est la différence déterminée, qui est utilisé pour le calcul de la consigne de couple.

Avantageusement, le procédé de régulation selon l'invention est mis en œuvre par le dispositif de démarrage selon l'invention.

Avantageusement, le dispositif de démarrage selon l'invention met en œuvre le procédé de régulation selon l'invention.

L'invention concerne également un procédé de démarrage d'une turbine à gaz, caractérisé en ce que la vitesse de rotation de la turbine à gaz est régulée selon un procédé de régulation selon l'invention, et en ce qu'il comprend successivement et dans cet ordre :
- une étape de lancement de la turbine à gaz par le système de lancement, durant laquelle la consigne de couple est calculée de façon à ce que la vitesse de rotation de la turbine à gaz varie d'une vitesse nulle à une vitesse dite vitesse d'allumage,
- une étape d'allumage de la turbine à gaz,
- une étape de mise en route de la turbine à gaz, durant laquelle la consigne de couple et la consigne de dosage carburant sont calculées de façon à augmenter la vitesse de rotation de la turbine à gaz jusqu'à une vitesse dite vitesse de transition,
- une étape de transition, durant laquelle la consigne de couple est fixe et la consigne de dosage carburant est calculée de façon à augmenter la vitesse de rotation de la turbine à gaz,
- une étape de régime normal, durant laquelle la consigne de couple est nulle et la consigne de dosage carburant est calculée de façon à faire varier la vitesse de rotation de la turbine à gaz.

Un procédé de démarrage selon l'invention permet donc un démarrage robuste et performant de la turbine à gaz par régulation de la vitesse selon le procédé de régulation. La vitesse est régulée selon plusieurs phases de démarrage afin de permettre un démarrage rapide et performant. Les transitions entre les phases sont améliorées par le calcul des consignes de couple du système de lancement et de consigne de dosage carburant du dispositif de dosage carburant selon l'information représentative de la vitesse de rotation de la turbine à gaz. En outre, le procédé de démarrage de l'invention est reproductible sur plusieurs démarrages de la turbine à gaz car il dépend de la vitesse de rotation de la turbine à gaz et est insensible aux variations de conditions extérieures.

De préférence, à l'étape d'allumage de la turbine à gaz, la consigne de couple est calculée de façon à maintenir la vitesse de rotation de la turbine à gaz à la vitesse d'allumage jusqu'à combustion du carburant injecté par le dispositif de dosage carburant selon la consigne de dosage carburant.

La stabilisation de la vitesse à la vitesse d'allumage durant l'étape d'allumage permet un allumage de la turbine à gaz optimisé et réduit le nombre de démarrages avortés dus à une vitesse d'allumage trop faible ou trop élevée.

Avantageusement, le procédé de démarrage selon l'invention est mis en œuvre par le dispositif de démarrage selon l'invention.

Avantageusement, le dispositif de démarrage selon l'invention met en œuvre le procédé de démarrage selon l'invention.

L'invention concerne également une turbine à gaz comprenant un dispositif selon l'invention.

L'invention concerne également un turbomoteur comprenant une turbine à gaz selon l'invention.

L'invention concerne également un dispositif de démarrage, un procédé de démarrage, un procédé de régulation, une turbine à gaz et un turbomoteur caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une représentation schématique d'un dispositif de démarrage selon un mode de réalisation de l'invention,
- la figure 2 est une représentation schématique d'un procédé de régulation selon un mode de réalisation de l'invention,
- la figure 3 est un profil de vitesse prédéterminé d'une turbine à gaz démarrée selon un procédé de démarrage selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

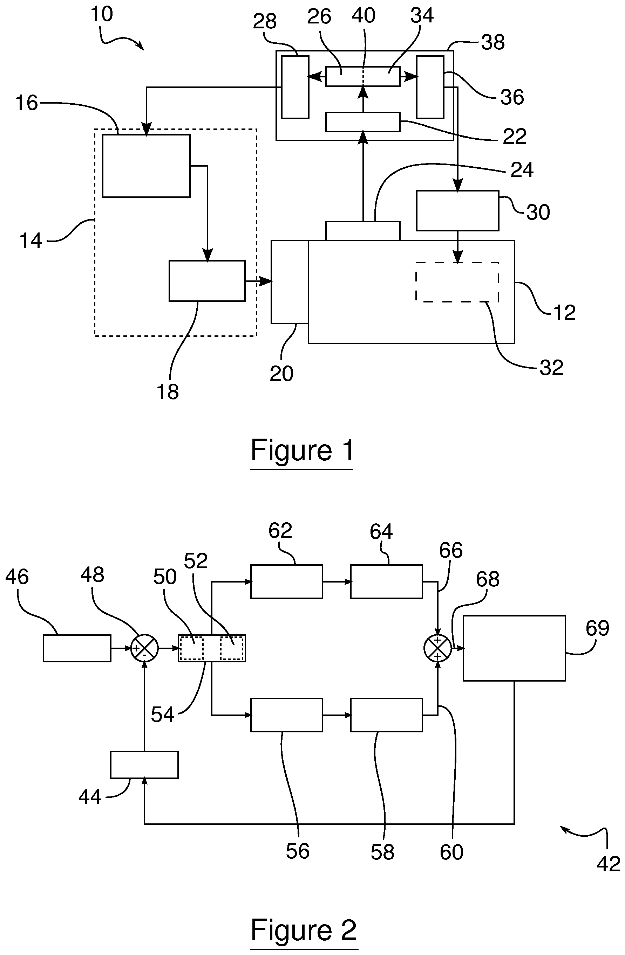

La figure 1 représente schématiquement un dispositif 10 de démarrage d'une turbine 12 à gaz selon un mode de réalisation de l'invention. Le dispositif 10 de démarrage a pour objectif de permettre le démarrage de la turbine 12 quand celle-ci n'est pas en rotation. En l'absence de rotation, le gaz dans la turbine 12 ne peut pas être brûlé pour entraîner la rotation de la turbine 12. Ainsi, pour permettre le démarrage de la turbine 12, un système 14 de lancement est connecté à la turbine afin de pouvoir enclencher sa rotation. Selon le mode de réalisation représenté figure 1, le système 14 de lancement est composé d'une machine 18 électrique, par exemple un alternateur, et d'un système 16 de pilotage de la machine électrique, par exemple un onduleur. Le système 16 de pilotage de la machine électrique apporte l'énergie électrique à la machine électrique 18 pour que cette dernière puisse entraîner la rotation de la turbine 12 à gaz, par le biais d'une boite relais 20.

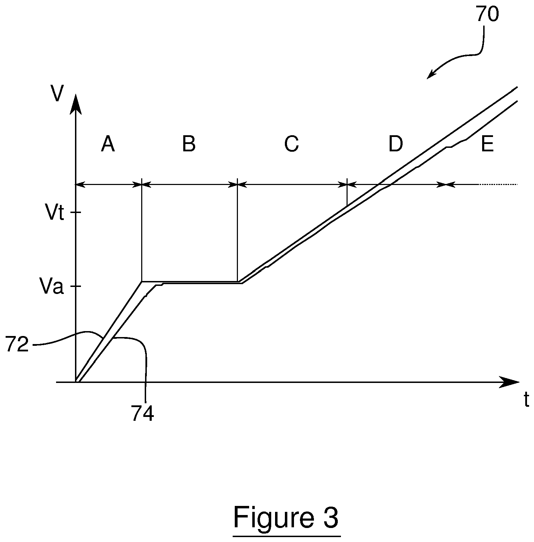

Pour commander le système 14 de lancement, le dispositif 10 de démarrage comprend des moyens permettant d'appliquer un profil de vitesse prédéterminé à la turbine 12. Un exemple d'un tel profil de vitesse prédéterminé est décrit plus loin dans la description en référence à la figure 3. Ces moyens sont notamment :
- des moyens 22 de réception d'une information représentative de la vitesse de rotation de la turbine 12 à gaz. Cette information est par exemple transmise par un capteur 24 de vitesse de rotation de la turbine 12.
- des moyens 26 de calcul d'une consigne de couple en fonction de ladite information représentative de la vitesse de rotation de la turbine 12 à gaz, notamment à partir d'une comparaison entre cette information représentative de la vitesse de rotation et le profil de vitesse prédéterminé. Ces moyens 26 de calcul permettent de déterminer la consigne de couple qui doit être appliquée sur la turbine 12 à gaz par le système 14 de lancement.
- des moyens 28 de transmission de ladite consigne de couple au système 14 de lancement, et plus particulièrement au système 16 de pilotage de la machine électrique. Le système 16 de pilotage de la machine électrique se charge ensuite de commander la machine 18 électrique par son alimentation électrique, afin d'appliquer à la turbine 12 à gaz le couple correspondant à la consigne de couple transmise.

Dans ce mode de réalisation, le dispositif 10 de démarrage comprend en outre un dispositif 30 de dosage carburant, qui permet l'injection de carburant dans une chambre 32 de combustion de la turbine 12 à gaz. Un type de dispositif 30 de dosage carburant est par exemple un FMU pour *Fuel Metering Unit* en anglais. Le dispositif 30 de dosage carburant injecte le carburant dans la chambre 32 de combustion de la turbine 12 à gaz afin que celui-ci soit brûlé, cette combustion permettant la rotation de la turbine 12 à gaz, notamment en régime normal de fonctionnement, à la suite du démarrage.

Pour permettre un dosage de carburant adapté, le dispositif 10 de démarrage comprend des moyens 34 de calcul d'une consigne de dosage carburant en fonction de l'information représentative de la vitesse de rotation de la turbine 12 à gaz et des moyens 36 de transmission de la consigne de dosage carburant au dispositif de dosage carburant. La consigne de dosage carburant est calculée en fonction de la vitesse de rotation de la turbine, notamment à partir d'une comparaison de cette vitesse de rotation de la turbine avec le profil de vitesse prédéterminé et l'injection de carburant permet la combustion de celui-ci dans la turbine pour apporter un couple supplémentaire à la turbine à gaz, qui s'ajoute au couple apporté par le système 14 de lancement.

Dans ce mode de réalisation, les moyens 22 de réception de l'information représentative de la vitesse, les moyens 26 de calcul de la consigne de couple, les moyens 34 de calcul de la consigne de dosage carburant, les moyens 28 de transmission de la consigne de couple et les moyens 36 de transmission de la consigne de dosage carburant sont embarqués dans un seul équipement, appelé unité 38 de commande. Cette unité 38 de commande permet de gérer simultanément le système 14 de lancement et le dispositif 30 de dosage carburant pour permettre un démarrage plus robuste. Cette unité 38 de commande peut en outre avoir davantage de fonctionnalités liées à la turbine 12 à gaz, non décrites ici. L'équipement pouvant faire office d'unité 38 de commande est par exemple un ECU, pour *Engine Control Unit* en anglais, notamment un FADEC, pour *Full Authority Digital Engine Control* en anglais, qui est un équipement régulièrement utilisé dans le domaine de l'aéronautique pour une utilisation de la turbine 12 à gaz en tant que turbine d'un turbomoteur.

En outre, dans ce mode de réalisation, les moyens 26 de calcul de la consigne de couple et les moyens 34 de calcul de la consigne de dosage carburant sont réunis dans un même équipement 40 de calcul. Cela permet un ajustement entre les deux consignes pour obtenir le couple de la turbine 12 à gaz désiré en combinant les effets du système 14 de lancement et du dispositif 30 de dosage carburant.

La figure 2 représente schématiquement un procédé 42 de démarrage selon un mode de réalisation de l'invention. Le procédé 42 est avantageusement mis en œuvre par le dispositif 10 décrit en lien avec la figure 1. Le procédé 42 comprend une étape 44 de réception d'une information représentative de la vitesse de rotation de la turbine 12 à gaz. Cette information est comparée, lors d'une étape 48 de comparaison, avec un profil 46 de vitesse prédéterminé, tel que par exemple décrit en référence avec la figure 3. Cette étape 48 de comparaison permet la détermination de la différence entre la vitesse de rotation réelle et la vitesse de rotation souhaitée définie par le profil 46 de vitesse prédéterminé et ladite différence déterminée permet ensuite, lors d'une étape 50 de calcul de la consigne de couple et une étape 52 de calcul de la consigne de dosage carburant, de déterminer la consigne de couple et la consigne de dosage carburant en fonction de la vitesse de rotation réelle et de la vitesse de rotation souhaitée de la turbine 12, et éventuellement selon une phase de démarrage dans laquelle se trouve la turbine 12. Dans ce mode de réalisation, les deux étapes 50, 52 de calcul sont réunies en une seule étape 54, afin de permettre une régulation plus robuste en utilisant à la fois le système 14 de lancement et l'injection de carburant par le dispositif 30 de dosage carburant pour apporter le couple nécessaire à la régulation de la vitesse.

La consigne de couple est transmise au système de pilotage de la machine électrique lors d'une étape 56 de transmission de la consigne de couple. Le système 16 de pilotage de la machine électrique commande la machine 18 électrique selon cette consigne, qui applique alors un couple à la turbine 12 lors d'une étape 58 d'application du couple du système de lancement. Le couple résultant est représenté par la flèche 60.

Par ailleurs, la consigne de dosage carburant est transmise au dispositif de dosage carburant lors d'une étape 62 de transmission de la consigne de dosage carburant, qui permet l'injection de carburant dans la chambre de combustion de la turbine à gaz. La combustion du gaz permet d'appliquer un couple à la turbine 12 lors d'une étape 64 d'application du couple du dispositif de dosage carburant. Le couple résultant est représenté par la flèche 66.

Le couple total appliqué à la turbine, représenté par la flèche 68, est donc l'addition des deux couples provenant du système 14 de lancement et du dispositif 30 de dosage carburant. Ce couple total permet d'entraîner la rotation de la turbine 12 à une certaine vitesse, représentée par l'étape 69, dont une information représentative est reçue durant l'étape 44 de réception d'une information représentative de la vitesse : le procédé de régulation constitue ainsi une boucle fermée de régulation.

La figure 3 représente un profil de vitesse prédéterminé d'une turbine à gaz démarrée selon un procédé de démarrage selon un mode de réalisation de l'invention. Le profil de vitesse prédéterminé représente la vitesse V de rotation en fonction du temps t, selon deux courbes, une courbe 72 de consigne de vitesse, représentant la vitesse de rotation que la turbine doit théoriquement suivre, et la courbe 74 de vitesse mesurée, représentant la vitesse de rotation de la turbine 12 effectivement mesurée.

Le profil 70 de vitesse prédéterminé permet de distinguer les différentes étapes d'un procédé de démarrage de la turbine 12 à gaz :
À l'étape A de lancement, le système 14 de lancement entraine seul la rotation de la turbine 12 à gaz, la combustion du gaz dans la turbine 12 n'ayant pas débuté.

L'étape B d'allumage permet d'allumer le gaz injecté dans la chambre 32 de combustion de la turbine 12 à gaz par le dispositif 30 de dosage carburant afin d'entraîner la combustion du gaz et d'entraîner la rotation de la turbine 12 à gaz. Pour assurer un allumage dans de bonnes conditions, la vitesse de rotation de la turbine 12 à gaz est maintenue à une vitesse dite vitesse d'allumage Va.

À l'étape C de mise en route de la turbine 12 à gaz, la vitesse de rotation de la turbine 12 augmente progressivement principalement grâce à l'action du système 14 de lancement et en partie grâce à la combustion du carburant injecté. La consigne de couple et la consigne de dosage sont calculées de sorte à ce que l'action du système 14 de lancement et la combustion du carburant injecté avec l'air aspiré par la turbine à gaz appliquent le couple désiré à la turbine 12 à gaz.

Une fois une vitesse dite vitesse de transition Vt atteinte, le procédé de démarrage passe dans l'étape D de transition, durant laquelle la consigne de couple est fixe, et la consigne de dosage carburant est calculée de façon à augmenter la vitesse de rotation de la turbine 12. Ainsi, c'est le carburant qui régule la vitesse de la turbine 12 de façon à suivre le profil de vitesse prédéterminé, le système 14 de lancement appliquant seulement un couple fixe.

Enfin, à l'étape E de régime normal, le démarrage est terminé et la turbine 12 rentre en régime normal. Le système 14 de lancement est arrêté et la turbine 12 est mise en rotation seulement par la combustion du carburant injecté par le dispositif 30 de dosage carburant.

## Revendications

1. Dispositif de démarrage d'une turbine (12) à gaz, comprenant un système (14) de lancement apte à entrainer sur commande ladite turbine (12) à gaz en rotation, comprenant :
- des moyens (22) de réception d'une information représentative de la vitesse de rotation de la turbine (12) à gaz,
- des moyens (26) de calcul d'une consigne de couple en fonction de ladite information représentative de la vitesse de rotation de la turbine (12) à gaz,
- des moyens (28) de transmission de ladite consigne de couple au système (14) de lancement,
les moyens de calcul de la consigne de couple étant adaptés pour effectuer une comparaison de l'information représentative de la vitesse de rotation de la turbine à gaz avec un profil de vitesse prédéterminé et calculer la consigne de couple à partir de ladite comparaison,
- un dispositif (30) de dosage carburant adapté pour injecter du carburant dans une chambre (32) de combustion de ladite turbine (12) à gaz,
- des moyens (34) de calcul d'une consigne de dosage carburant en fonction de ladite information représentative de la vitesse, et
- des moyens (36) de transmission de la consigne de dosage carburant audit dispositif (30) de dosage carburant,
et **caractérisé en ce que** les moyens de calcul de la consigne de dosage carburant sont adaptés pour effectuer une comparaison de l'information représentative de la vitesse de rotation de la turbine à gaz avec un profil de vitesse prédéterminé et calculer la consigne de dosage carburant à partir de ladite comparaison.

2. Dispositif de démarrage selon la revendication précédente, **caractérisé en ce que** les moyens (22) de réception d'une information représentative de la vitesse de rotation de la turbine (12) à gaz, les moyens (26) de calcul de la consigne de couple, les moyens (34) de calcul de la consigne de dosage carburant, les moyens (28) de transmission de la consigne de couple et les moyens (36) de transmission de la consigne de dosage carburant sont embarqués dans une unité (38) de commande pilotant ladite turbine (12) à gaz.

3. Dispositif de démarrage selon l'une des revendications précédentes, **caractérisé en ce que** le système (14) de lancement est apte à entrainer en rotation la turbine (12) à gaz par le biais d'une boîte relais (20).

4. Dispositif de démarrage selon l'une des revendications précédentes, **caractérisé en ce que** ledit système (14) de lancement comprend une machine (18) électrique apte à entraîner en rotation ladite turbine (12) à gaz, et un système (16) de pilotage de la machine (18) électrique configuré pour recevoir ladite consigne de couple et pour commander l'alimentation de ladite machine (18) électrique selon la consigne de couple.

5. Procédé de régulation de la vitesse de rotation d'une turbine (12) à gaz configurée pour être entrainée par un système (14) de lancement, comprenant :
- une étape (44) de réception d'une information représentative de la vitesse de rotation de la turbine (12) à gaz,
- une étape de comparaison (48) de l'information représentative de la vitesse de rotation de la turbine (12) à gaz avec un profil de vitesse prédéterminé,
- une étape (50) de calcul d'une consigne de couple à partir d'un résultat de ladite comparaison (48),
- une étape (56) de transmission de ladite consigne de couple au système (14) de lancement,
et **caractérisé en ce qu'**il comprend :
- une étape (52) de calcul d'une consigne de dosage carburant à partir du résultat de ladite comparaison,
- une étape (62) de transmission de la consigne de dosage carburant à un dispositif (30) de dosage carburant adapté pour injecter du carburant dans une chambre (32) de combustion de la turbine à gaz en fonction de ladite consigne de dosage carburant.

6. Procédé de démarrage d'une turbine à gaz, **caractérisé en ce que** la vitesse de rotation de la turbine (12) à gaz est régulée selon un procédé de régulation selon la revendication 5, et **en ce qu'**il comprend successivement et dans cet ordre :
- une étape (A) de lancement de la turbine (12) à gaz par le système (14) de lancement, durant laquelle la consigne de couple est calculée de façon à ce que la vitesse de rotation de la turbine (12) à gaz varie d'une vitesse nulle à une vitesse dite vitesse d'allumage (Va),
- une étape (B) d'allumage de la turbine à gaz, durant laquelle la consigne de couple est calculée de façon à maintenir la vitesse de rotation de la turbine (12) à gaz à la vitesse d'allumage jusqu'à la combustion du carburant injecté par le dispositif (30) de dosage carburant selon la consigne de dosage carburant,
- une étape (C) de mise en route de la turbine (12) à gaz, durant laquelle la consigne de couple et la consigne de dosage carburant sont calculés de façon à augmenter la vitesse de rotation de la turbine (12) à gaz jusqu'à une vitesse dite vitesse de transition (Vt),
- une étape (D) de transition, durant laquelle la consigne de couple est fixe et la consigne de dosage carburant est calculée de façon à augmenter la vitesse de rotation de la turbine (12) à gaz,
- une étape (E) de régime normal, durant laquelle la consigne de couple est nulle et la consigne de dosage carburant est calculée de façon à faire varier la vitesse de rotation de la turbine (12) à gaz.

7. Turbine à gaz, **caractérisée en ce qu'**elle comprend un dispositif (10) de démarrage selon l'une des revendications 1 à 4.

8. Turbomoteur, **caractérisé en ce qu'**il comprend une turbine (12) à gaz selon la revendication 7.

## Patentansprüche

1. Startvorrichtung einer Gasturbine (12), umfassend ein Inbetriebnahmesystem (14), das geeignet ist, auf Anfrage die Gasturbine (12) in Rotation zu versetzen, umfassend:
- Empfangsmittel (22) einer für die Drehzahl der Gasturbine (12) repräsentativen Information,
- Berechnungsmittel (26) eines Drehmomentsollwerts in Abhängigkeit von der für die Drehzahl der Gasturbine (12) repräsentativen Information,
- Übertragungsmittel (28) des Drehmomentsollwerts auf das Inbetriebnahmesystem (14),
wobei die Berechnungsmittel des Drehmomentsollwerts zum Durchführen eines Vergleichs der für die Drehzahl der Gasturbine repräsentativen Information mit einem vorher festgelegten Geschwindigkeitsprofil und Berechnen des Drehmomentsollwerts ausgehend von dem Vergleich angepasst sind,
- eine Kraftstoffdosierungsvorrichtung (30), die zum Einspritzen des Kraftstoffs in eine Brennkammer (32) der Gasturbine (12) angepasst ist,
- Berechnungsmittel (34) eines Kraftstoffdosierungssollwerts in Abhängigkeit von der für die Geschwindigkeit repräsentativen Information, und
- Übertragungsmittel (36) des Kraftstoffdosierungssollwerts auf die Kraftstoffdosierungsvorrichtung (30),
und **dadurch gekennzeichnet, dass** die Berechnungsmittel des Kraftstoffdosierungssollwerts zum Durchführen eines Vergleichs der für die Drehzahl der Gasturbine repräsentativen Information mit einem vorher festgelegten Geschwindigkeitsprofil und Berechnen des Kraftstoffdosierungssollwerts ausgehend von dem Vergleich angepasst sind.

2. Startvorrichtung nach dem vorstehenden Anspruch, **dadurch gekennzeichnet, dass** die Empfangsmittel (22) einer für die Drehzahl der Gasturbine (12) repräsentativen Information, die Berechnungsmittel (26) des Drehmomentsollwerts, die Berechnungsmittel (34) des Kraftstoffdosierungssollwerts, die Übertragungsmittel (28) des Drehmomentsollwerts und die Übertragungsmittel (36) des Kraftstoffdosierungssollwerts in einer Befehlseinheit (38), die die Gasturbine (12) steuert, eingebaut sind.

3. Startvorrichtung nach einem der vorstehenden Ansprüche, **dadurch gekennzeichnet, dass** das Inbetriebnahmesystem (14) geeignet ist, die Gasturbine (12) mittels eines Relaiskastens (20) in Rotation zu versetzen.

4. Startvorrichtung nach einem der vorstehenden Ansprüche, **dadurch gekennzeichnet, dass** das Inbetriebnahmesystem (14) eine elektrische Maschine (18) umfasst, die geeignet ist, die Gasturbine (12) in Rotation zu versetzen, und ein Steuerungssystem (16) der elektrischen Maschine (18), das zum Empfangen des Drehmomentsollwerts und zum Anfragen der Versorgung der elektrischen Maschine (18) gemäß dem Drehmomentsollwert konfiguriert ist.

5. Regulierungsverfahren der Drehzahl einer Gasturbine (12), die konfiguriert ist, um durch ein Inbetriebnahmesystem (14) angetrieben zu werden, umfassend:
- einen Empfangsschritt (44) einer für die Drehzahl der Gasturbine (12) repräsentativen Information,
- einen Vergleichsschritt (48) der für die Drehzahl der Gasturbine (12) repräsentativen Information mit einem vorher festgelegten Geschwindigkeitsprofil,
- einen Berechnungsschritt (50) eines Drehmomentsollwerts ausgehend von einem Ergebnis des Vergleichs (48),
- einen Übertragungsschritt (56) des Drehmomentsollwerts auf das Inbetriebnahmesystem (14),
und **dadurch gekennzeichnet, dass** es Folgendes umfasst:
- einen Berechnungsschritt (52) eines Kraftstoffdosierungssollwerts ausgehend von dem Ergebnis des Vergleichs,
- einen Übertragungsschritt (62) des Kraftstoffdosierungssollwerts auf eine Kraftstoffdosierungsvorrichtung (30), die zum Einspritzen des Kraftstoffs in eine Brennkammer (32) der Gasturbine in Abhängigkeit von dem Kraftstoffdosierungssollwert angepasst ist.

6. Startverfahren einer Gasturbine, **dadurch gekennzeichnet, dass** die Drehzahl der Gasturbine (12) gemäß einem Regulierungsverfahren nach Anspruch 5 reguliert wird, und dadurch, dass es aufeinander folgend und in dieser Reihenfolge Folgendes umfasst:
- einen Inbetriebnahmeschritt (A) der Gasturbine (12) durch das Inbetriebnahmesystem (14), während dem der Drehmomentsollwert derart berechnet wird, dass sich die Drehzahl der Gasturbine (12) von einer Nullgeschwindigkeit auf eine Zündgeschwindigkeit (Va) genannte Geschwindigkeit ändert,
- einen Zündschritt (B) der Gasturbine, während dem der Drehmomentsollwert derart berechnet wird, um die Drehzahl der Gasturbine (12) bei der Zündgeschwindigkeit bis zur Verbrennung des durch die Dosierungsvorrichtung (30) gemäß dem Kraftstoffdosierungssollwert eingespritzten Kraftstoffs zu halten,
- einen Ingangsetzungsschritt (C) der Gasturbine (12), während dem der Drehmomentsollwert und der Kraftstoffdosierungssollwert derart berechnet werden, um die Drehzahl der Gasturbine (12) bis zu einer Übergangsgeschwindigkeit (Vt) genannten Geschwindigkeit zu erhöhen,
- einen Übergangsschritt (D), während dem der Drehmomentsollwert fest steht und der Kraftstoffdosierungssollwert derart berechnet wird, um die Drehzahl der Gasturbine (12) zu erhöhen,
- einen Normalbetriebsschritt (E), während dem der Drehmomentsollwert Null ist und der Kraftstoffdosierungssollwert derart berechnet wird, um die Drehzahl der Gasturbine (12) zu ändern.

7. Gasturbine, **dadurch gekennzeichnet, dass** sie eine Startvorrichtung (10) nach einem der Ansprüche 1 bis 4 umfasst.

8. Turbomotor, **dadurch gekennzeichnet, dass** er eine Gasturbine (12) nach Anspruch 7 umfasst.

## Claims

1. Device for starting a gas turbine (12), comprising an initiation system (14) able to rotate said gas turbine (12) on command,
comprising:
- means (22) for receiving information representing the rotation speed of the gas turbine (12),
- means (26) for calculating a set torque value according to said information representing the rotation speed of the gas turbine (12),
- means for (28) transmitting said set torque value to the initiation system (14),
the means for calculating the set torque value being suitable for making a comparison of the information representing the rotation speed of the gas turbine with a predetermined speed profile and calculating the set torque value from said comparison,
- a fuel metering device (30) suitable for injecting fuel into a combustion chamber (32) of said gas turbine (12),
- means (34) for calculating a set fuel metering value according to said information representing the speed, and
- means (36) for transmitting the set fuel metering value to said fuel metering device (30),
and **characterised in that** the means for calculating the set fuel metering value are suitable for making a comparison of the information representing the rotation speed of the gas turbine with a predetermined speed profile and calculating the set fuel metering value from said comparison.

2. Starting device according to the preceding claim, **characterised in that** the means (22) for receiving information representing the rotation speed of the gas turbine (12), the means (26) for calculating the set torque value, the means (34) for calculating the set fuel metering value, the means (28) for transmitting the set torque value and the means (36) for transmitting the set fuel metering value are contained in a control unit (38) controlling said gas turbine (12).

3. Starting device according to any of the preceding claims, **characterised in that** initiation system (14) is able to rotate the gas turbine (12) by means of a relay box (20).

4. Starting device according to any of the preceding claims, **characterised in that** said initiation system (14) comprises an electrical machine (18) able to rotate said gas turbine (12), and a system (16) for controlling the electrical machine (18) configured so as to receive said set torque value and to control the power supply to said electrical machine (18) according to the set torque value.

5. Method for regulating the rotation speed of a gas turbine (12) configured so as to be driven by an initiation system (14), comprising:
- a step (44) of receiving information representing the rotation speed of the gas turbine (12),
- a step (48) of comparing the information representing the rotation speed of the gas turbine (12) with a predetermined speed profile,
- a step (50) of calculating a set torque value from a result of said comparison (48),
- a step (56) of transmitting said set torque value to the initiation system (14).
and **characterised in that** it comprises:
- a step (52) of calculating a set fuel metering value from the result of said comparison,
- a step (62) of transmitting the set fuel metering value to a fuel metering device (30) suitable for injecting fuel into a combustion chamber (32) of the gas turbine according to said set fuel metering value.

6. Method for starting a gas turbine, **characterised in that** the rotation speed of the gas turbine (12) is regulated according to a regulation method according to claim 5, and **in that** it comprises, successively and in this order:
- a step (A) of starting the gas turbine (12) by means of the initiation system (14), during which the set torque value is calculated so that the rotation speed of the gas turbine (12) varies from a zero speed to a so-called ignition speed (Va),
- a step (B) of igniting the gas turbine, during which the set torque value is calculated so as to maintain the rotation speed of the gas turbine (12) at the ignition speed until the fuel injected by the fuel metering device (30) according to the set fuel metering value combusts,
- a step (C) of starting up the gas turbine (12), during which the set torque value and the set fuel metering value are calculated so as to increase the rotation speed of the gas turbine (12) up to a so-called transition speed (Vt),
- a transition step (D), during which the set torque value is fixed and the set fuel metering value is calculated so as to increase the rotation speed of the gas turbine (12).
- a normal-regime step (E), during which the set torque value is zero and the set fuel metering value is calculated so as to vary the rotation speed of the gas turbine (12).

7. Gas turbine, **characterised in that** it comprises a starting device (10) according to any of claims 1 to 4.

8. Turbine engine, **characterised in that** it comprises a gas turbine (12) according to claim 7.
